# EUROPEAN PATENT APPLICATION

(11) **EP 4 212 793 A1**
(43) Date of publication of application: **19.07.2023**
(21) Application number: 23151632.9
(22) Date of filing: 13.01.2023
(51) Int. Cl.: F25B 1/06, F25B 1/10, F25B 9/08, F25B 13/00, F25B 29/00, F25B 41/20, F25B 41/385, F25B 49/02

(54) **HEAT PUMP SYSTEM AND A CONTROL METHOD THEREOF**

(30) Priority: 17.01.2022 CN 202210047132
(71) Applicant: Carrier Corporation, Palm Beach Gardens, FL 33418 (US)
(72) Inventor: SHEN, Guangyu, Shanghai, 201206 (CN); WANG, Chaojie, Shanghai, 201206 (CN)
(74) Representative: Dehns

(57) **Abstract**

The present application provides a heat pump system and a control method thereof. The heat pump system comprises: a main flow path provided with a compressor, a reversing valve, a first heat exchanger, a first throttling device and a second heat exchanger; wherein, the heat pump system further comprises an ejector comprising a high-pressure fluid inlet, a fluid suction inlet and a fluid outlet, wherein the high-pressure fluid inlet of the ejector is connected between the second heat exchanger and the first throttling device on the main flow path through a second throttling device, the fluid suction inlet of the ejector is connected to the reversing valve, and the fluid outlet of the ejector is connected to a separator, and wherein a gas phase outlet of the separator is connected to the compressor, and a liquid phase outlet of the separator is connected between the first heat exchanger and the first throttling device on the main flow path. The heat pump system according to the embodiments of the present invention can operate at low ambient temperatures to improve system performance.

## Description

The present invention relates to the field of heat exchange systems, and in particular to a heat pump system and a control method thereof.

Heat pump systems generally include components such as compressors, reversing valves, condensers, expansion valves and evaporators for cooling and heating. Heating performance of heat pump systems is reduced at low ambient temperatures. In order to improve the heating performance of heat pump systems at low ambient temperatures, ejectors are proposed to be incorporated into heat pump systems. The arrangement of ejectors can increase the performance of heat pump systems at low temperatures, but ejectors with special configurations or the need to work with numerous valve components may lead to increased costs for heat pump systems. In addition, excessive flow resistance on the flow path may cause the ejectors to fail to function properly.

The object of the present application is to solve or at least alleviate the problems existing in the prior art.

According to a first aspect of the invention, a heat pump system is provided, which comprises:
a main flow path provided with a compressor, a reversing valve, a first heat exchanger, a first throttling device and a second heat exchanger;
wherein, the heat pump system further comprises an ejector comprising a high-pressure fluid inlet, a fluid suction inlet and a fluid outlet, wherein the high-pressure fluid inlet of the ejector is connected between the second heat exchanger and the first throttling device on the main flow path through a second throttling device, the fluid suction inlet of the ejector is connected to the reversing valve, and the fluid outlet of the ejector is connected to a separator, and wherein a gas phase outlet of the separator is connected to the compressor, and a liquid phase outlet of the separator is connected between the first heat exchanger and the first throttling device on the main flow path.

Optionally, in an embodiment of the heat pump system, the liquid phase outlet of the separator is connected between the first heat exchanger and the first throttling device on the main flow path through a check valve.

Optionally, in an embodiment of the heat pump system, only the check valve is provided on the flow path between the liquid phase outlet of the separator and the first heat exchanger.

Optionally, in an embodiment of the heat pump system, the first throttling device and the second throttling device are both electronic expansion valves.

Optionally, in an embodiment of the heat pump system, the heat pump system can operate in a cooling mode, a heating mode, and a heating mode with ejector. In the cooling mode and the heating mode, the second throttling device shuts down, and the first throttling device operates. In the heating mode with ejector, the first throttling device shuts down, and the second throttling device operates.

Optionally, in an embodiment of the heat pump system, in the cooling mode, the refrigerant flowing out of the compressor outlet is throttled by the first throttling device after passing through the first heat exchanger, and flows in from the fluid suction inlet of the ejector and flows out of the fluid outlet of the ejector to enter the separator after passing through the second heat exchanger, wherein the gas phase refrigerant in the separator returns from the gas phase outlet of the separator to the compressor inlet;
in the heating mode, the refrigerant flowing out of the compressor outlet is throttled by the first throttling device after passing through the second heat exchanger, and flows in from the fluid suction inlet of the ejector and flows out of the fluid outlet of the ejector to enter the separator after passing through the first heat exchanger, wherein the gas phase refrigerant in the separator returns from the gas phase outlet of the separator to the compressor inlet; and
in the heating mode with ejector, the refrigerant flowing out of the compressor outlet, after passing through the second heat exchanger and the second throttling device, flows in from the high-pressure fluid inlet of the ejector to mix in the ejector with the refrigerant that leaves from the liquid phase outlet of the separator, passes through the first heat exchanger and flows in from the fluid suction inlet of the ejector to enter the separator, wherein the gas phase refrigerant in the separator returns from the gas phase outlet of the separator to the compressor inlet.

Optionally, in an embodiment of the heat pump system, in the heating mode with ejector, the second throttling device is used to control the dryness of the fluid entering the high-pressure fluid inlet of the ejector.

According to a second aspect of the invention, a method of controlling a heat pump system according to the first aspect of the invention is provided, which comprises:
shutting down the second throttling device and operating the first throttling device in the cooling mode and the heating mode; and
shutting down the first throttling device and operating the second throttling device in the heating mode with ejector.

Optionally, the method comprises: in the cooling mode, allowing the refrigerant flowing out of the compressor outlet to be throttled by the first throttling device after passing through the first heat exchanger, and to flow in from the fluid suction inlet of the ejector and flow out of the fluid outlet of the ejector to enter the separator after passing through the second heat exchanger, wherein the gas phase refrigerant in the separator returns from the gas phase outlet of the separator to the compressor inlet;
in the heating mode, allowing the refrigerant flowing out of the compressor outlet to be throttled by the first throttling device after passing through the second heat exchanger, and to flow in from the fluid suction inlet of the ejector and flows out of the fluid outlet of the ejector to enter the separator after passing through the first heat exchanger, wherein the gas phase refrigerant in the separator returns from the gas phase outlet of the separator to the compressor inlet; and
in the heating mode with ejector, allowing the refrigerant flowing out of the compressor outlet, after passing through the second heat exchanger and the second throttling device, to flow in from the high-pressure fluid inlet of the ejector to mix in the ejector with the refrigerant that leaves from the liquid phase outlet of the separator, passes through the first heat exchanger and flows in from the fluid suction inlet of the ejector to enter the separator, wherein the gas phase refrigerant in the separator returns from the gas phase outlet of the separator to the compressor inlet.

Optionally, the method comprises adjusting the opening of the second throttling device to control the dryness of the fluid entering the high-pressure fluid inlet of the ejector in the heating mode with the ejector.

A heat pump system according to the embodiments of the present invention can operate at low ambient temperatures to improve system performance.

With reference to the accompanying drawings, the disclosure of the present application will become easier to understand. Those skilled in the art would easily understand that these drawings are for the purpose of illustration, are provided by way of example only, and are not intended to limit the protection scope of the present application. In addition, in the figures, similar numerals are used to denote similar components, where:
FIG 1 is a schematic diagram of a heat pump system according to an embodiment of the present invention;
FIG 2 is a schematic diagram of the heat pump system of FIG 1 operating in cooling and heating modes; and
FIG 3 is a schematic diagram of the heat pump system of FIG 1 operating in a heating mode with ejector.

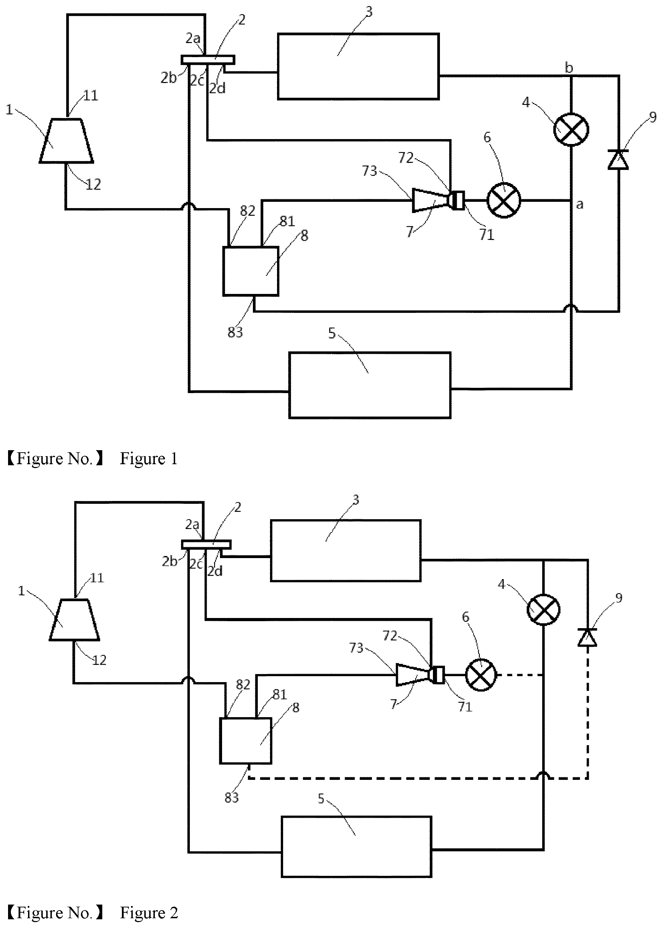

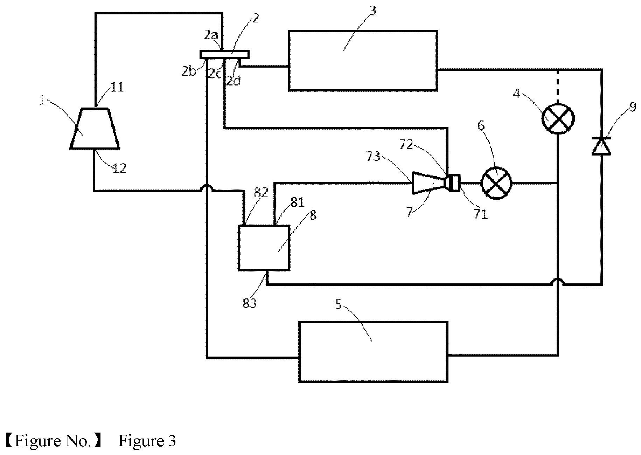

A heat pump system according to an embodiment of the present invention is described with reference to FIGS. 1 and 3. The heat pump system according to the embodiment comprises: a main flow path provided with a compressor 1, a reversing valve 2, a first heat exchanger 3, a first throttling device 4 and a second heat exchanger 5. The reversing valve 2 is configured such that a compressor outlet 11 and a compressor inlet 12 are selectively connected to the first heat exchanger 3 and the second heat exchanger 5, respectively. For example, in the cooling mode, the compressor outlet 11 is connected to the first heat exchanger 3, and in the heating mode, the compressor outlet is connected to the second heat exchanger 5. The heat pump system further comprises an ejector 7, which comprises a high-pressure fluid inlet 71, a fluid suction inlet 72, and a fluid outlet 73. In addition, the ejector 7 also comprises a mixing chamber for mixing the fluid flowing in from the high-pressure fluid inlet 71 and the fluid suction inlet 72 and a diffusion chamber. The high-pressure fluid inlet 71 of the ejector 7 is connected between the second heat exchanger 5 and the first throttling device 4 on the main flow path (point a in FIG 1) through the second throttling device 6. The fluid suction inlet 72 of the ejector 7 is connected to the reversing valve 2, and to the first heat exchanger 3 or the second heat exchanger 5 through the reversing valve 2. The fluid outlet 73 of the ejector is connected to an inlet 81 of a separator 8, and a gas phase outlet 82 of the separator 8 is connected to a compressor 12. In addition, a liquid outlet 83 of the separator 8 is connected between the first heat exchanger 3 and the first throttling device 4 on the main flow path (point b in FIG 1). In some embodiments, the liquid outlet 83 of the separator 8 is connected between the first heat exchanger 3 and the first throttling device 4 on the main flow path through a check valve 9. In some embodiments, only a check valve 9 is arranged on the flow path between the liquid outlet 83 of the separator 8 and the first heat exchanger 3, without other components having significant fluid resistance. In an alternative embodiment, the liquid outlet 83 of the separator 8 can be connected to other suitable position in the heat pump system to guide the liquid phase refrigerant to that suitable position.

The heat pump system according to an embodiment can operate in a cooling mode, a heating mode and a heating mode with ejector. The heating mode with ejector can be applied when, for example, the ambient temperature is low. For example, an ambient temperature sensor can be arranged, and the heating mode with ejector can be activated when the ambient temperature is below a threshold. As shown in FIG 2, in the cooling mode and the heating mode, the second throttling device 6 shuts down and the first throttling device 4 operates. As shown in FIG 3, in the heating mode with ejector, the first throttling device 4 shuts down and the second throttling device 6 operates.

More specifically, as shown in FIG 2, in the cooling mode, the reversing valve 2 is configured so that a first port 2a and a fourth port 2d are connected, and a second port 2b and a third port 2c are connected. The refrigerant flowing out of the compressor outlet 11 is passing through the first heat exchanger 3, throttled by the first throttling device 4, and passing through the second heat exchanger 5, then flowing in from the fluid suction inlet 72 of the ejector 7 and flowing out of the fluid outlet 73 of the ejector to enter the separator 8 from the inlet 81 of the separator wherein the gas phase refrigerant in the separator 8 returns from the gas phase outlet 82 of the separator to the compressor inlet 12. In this process, although the refrigerant passes through the ejector 7, the ejector 7 actually only equals to a section of the flow path and does not function because the second throttling device 6 shuts down. In addition, the pressure at the liquid-phase fluid outlet 83 of the separator 8 is lower than the position b between the first heat exchanger 3 and the first throttling device 4 on the main flow path, so there is no fluid flowing from the liquid-phase fluid outlet 83 of the separator 8 to the position between the first heat exchanger 3 and the first throttling device 4 on the main flow path. In the heating mode, the reversing valve 2 is configured so that the first port 2a and the second port 2b are connected, and the third port 2c and the fourth port 2d are connected. The refrigerant flowing out of the compressor outlet 11 is passing through the second heat exchanger 5, throttled by the first throttling device 4 and passing through the first heat exchanger 3, then flowing in from the fluid suction inlet 72 of the ejector and flowing out of the fluid outlet 73 of the ejector to enter the separator 8, wherein the gas-phase refrigerant in the separator 8 returns from the gas phase outlet 82 of the separator to the compressor inlet 12. Similarly, in this process, although the refrigerant passes through the ejector 7, the ejector 7 actually only equals to a section of the flow path and does not function because the second throttling device 6 shuts down. In addition, the pressure at the liquid-phase fluid outlet 83 of the separator 8 is lower than the position between the first heat exchanger 3 and the first throttling device 4 on the main flow path, so there is no fluid flowing from the liquid-phase fluid outlet 83 of the separator 8 to the position between the first heat exchanger 3 and the first throttling device 4 on the main flow path. In addition, in the heating mode with ejector, the reversing valve 2 is configured the same as that in the heating mode above, the first throttling device 4 shuts down, and the second throttling device 6 operates. The refrigerant flowing out of the compressor outlet 11, after passing through the second heat exchanger 5 and the second throttling device 6, flows in from the high-pressure fluid inlet 71 of the ejector to mix in the ejector 7 with the refrigerant that leaves from the liquid phase outlet 83 of the separator 8, passes through the first heat exchanger 3 and flows in from the fluid suction inlet 72 of the ejector, and then the mixed fluid flows out of the fluid outlet 73 and enters the separator 8 from the inlet 81 of the separator 8, wherein the gas-phase refrigerant returns from the gas-phase outlet 81 of the separator 8 to the compressor inlet 12. In the heating mode with ejector, the second throttling device 6 is used to control the dryness (i.e. the ratio of gas phase to gas phase and liquid phase) of the fluid entering the high-pressure fluid inlet 71 of the ejector, i.e., the opening of the second throttling device 6 is to be increased when the dryness is high, and the opening of the second throttling device 6 is to be reduced when the dryness is low. In some embodiments, the first throttling device 4 and the second throttling device 6 may both be electronic expansion valves.

The device according to the embodiments of the present invention, by adding only a throttling device and a check valve, realizes a heating mode with ejector suitable for low ambient temperatures, whose cost is relatively low. In addition, since only one check valve is arranged between the liquid phase fluid outlet of the separator and the first heat exchanger without other components having significant flow resistance, the pressure loss of the fluid is small, which improves the operation stability and performance of the entire ejector system and avoids the situation that the ejector cannot work due to excessive flow resistance.

According to another aspect, a method of controlling a heat pump system according to an embodiment is provided, which comprises: shutting down the second throttling device and operating the first throttling device in a cooling mode and a heating mode; and shutting down the first throttling device and operating the second throttling device in the heating mode with ejector.

Optionally, the method comprises: in the cooling mode, allowing the refrigerant flowing out of the compressor outlet to be throttled by the first throttling device after passing through the first heat exchanger, to flow in from the fluid suction inlet of the ejector and flow out of the fluid outlet of the ejector after passing through the second heat exchanger, and to return to the compressor inlet from the gas phase outlet of the separator after passing through the separator; in the heating mode, allowing the refrigerant flowing out of the compressor outlet to be throttled by the first throttling device after passing through the second heat exchanger, to flow in from the fluid suction inlet of the ejector and flow out of the fluid outlet of the ejector after passing through the first heat exchanger, and to return to the compressor inlet from the gas phase outlet of the separator after passing through the separator; and in the heating mode with ejector, allowing the refrigerant flowing out of the compressor outlet, after passing through the second heat exchanger and the second throttling device, to flow in from the high-pressure fluid inlet of the ejector to mix with the refrigerant that leaves from the liquid phase outlet of the separator, passes through the first heat exchanger and flows in from the fluid suction inlet of the ejector in the ejector, and to return to the compressor inlet from the gas phase outlet of the separator after passing through the separator.

The specific embodiments described above in the present application are merely intended to describe the principle of the present application more clearly, wherein various components are clearly shown or described to facilitate the understanding of the principle of the present invention. Those skilled in the art may, without departing from the scope of the present application, make various modifications or changes to the present application. Therefore, it should be understood that these modifications or changes should be included within the scope of patent protection of the present application.

## Claims

1. A heat pump system, comprising:
a main flow path provided with a compressor (1), a reversing valve (2), a first heat exchanger (3), a first throttling device (4) and a second heat exchanger (5);
wherein, the heat pump system further comprises an ejector (7) comprising a high-pressure fluid inlet (71), a fluid suction inlet (72) and a fluid outlet (73), wherein the high-pressure fluid inlet (71) of the ejector (7) is connected between the second heat exchanger (5) and the first throttling device (4) on the main flow path through a second throttling device (6), the fluid suction inlet (72) of the ejector (7) is connected to the reversing valve (2), and the fluid outlet (73) of the ejector (7) is connected to a separator (8), and wherein a gas phase outlet (82) of the separator (8) is connected to the compressor (1), and a liquid phase outlet (83) of the separator (8) is connected between the first heat exchanger (3) and the first throttling device (4) on the main flow path.

2. The heat pump system according to claim 1, wherein the liquid phase outlet (83) of the separator (8) is connected between the first heat exchanger (3) and the first throttling device (40) on the main flow path through a check valve (9).

3. The heat pump system according to claim 2, wherein only the check valve (9) is provided on the flow path between the liquid phase outlet (83) of the separator (8) and the first heat exchanger (3).

4. The heat pump system according to claim 1, 2 or 3, wherein the first throttling device (4) and the second throttling device (6) are both electronic expansion valves.

5. The heat pump system according to any of claims 1 to 4, wherein the heat pump system is capable of operating in a cooling mode, a heating mode, and a heating mode with ejector (7), wherein in the cooling mode and the heating mode, the second throttling device (6) shuts down and the first throttling device (4) operates, and in the heating mode with ejector (7), the first throttling device (4) shuts down and the second throttling device (6) operates.

6. The heat pump system according to claim 5, wherein, in the cooling mode, refrigerant flowing out of a compressor outlet (11) is throttled by the first throttling device (4) after passing through the first heat exchanger (3), and flows in from the fluid suction inlet (72) of the ejector (7) and flows out of the fluid outlet (73) of the ejector (7) to enter the separator (8) after passing through the second heat exchanger (5), wherein gas phase refrigerant in the separator (8) returns from the gas phase outlet (82) of the separator (8) to the compressor inlet (12);
in the heating mode, the refrigerant flowing out of the compressor outlet (11) is throttled by the first throttling device (4) after passing through the second heat exchanger (5), and flows in from the fluid suction inlet (72) of the ejector (7) and flows out of the fluid outlet (73) of the ejector (7) to enter the separator (8) after passing through the first heat exchanger (3), wherein the gas phase refrigerant in the separator (8) returns from the gas phase outlet (82) of the separator (8) to the compressor inlet (12); and
in the heating mode with ejector (7), the refrigerant flowing out of the compressor outlet (11), after passing through the second heat exchanger (5) and the second throttling device (6), flows in from the high-pressure fluid inlet (71) of the ejector (7) to mix in the ejector (7) with refrigerant that leaves from the liquid phase outlet (83) of the separator (8), passes through the first heat exchanger (3) and flows in from the fluid suction inlet (72) of the ejector (7) to enter the separator (8), wherein the gas phase refrigerant in the separator (8) returns from the gas phase outlet (82) of the separator (8) to the compressor inlet (12).

7. The heat pump system according to claim 6, wherein in the heating mode with ejector (7), the second throttling device (6) is used to control dryness of fluid entering the high-pressure fluid inlet (71) of the ejector (7).

8. A method of controlling a heat pump system according to any preceding claim, wherein the method comprises:
shutting down the second throttling device (6) and operating the first throttling device (4) in the cooling mode and the heating mode; and
shutting down the first throttling device (4) and operating the second throttling device (6) in the heating mode with ejector (7).

9. The method according to claim 8, wherein the method comprises: in the cooling mode, allowing the refrigerant flowing out of the compressor outlet (11) to be throttled by the first throttling device (4) after passing through the first heat exchanger (3), and to flow in from the fluid suction inlet (72) of the ejector (7) and flow out of the fluid outlet (73) of the ejector (7) to enter the separator (8) after passing through the second heat exchanger (5), wherein the gas phase refrigerant in the separator (8) returns from the gas phase outlet (82) of the separator (8) to the compressor inlet (12);
in the heating mode, allowing the refrigerant flowing out of the compressor outlet (11) to be throttled by the first throttling device (4) after passing through the second heat exchanger (5), and to flow in from the fluid suction inlet (72) of the ejector (7) and flows out of the fluid outlet (73) of the ejector (7) to enter the separator (8) after passing through the first heat exchanger (3), wherein the gas phase refrigerant in the separator (8) returns from the gas phase outlet (82) of the separator (8) to the compressor inlet (12); and
in the heating mode with ejector (7), allowing the refrigerant flowing out of the compressor outlet (11), after passing through the second heat exchanger (5) and the second throttling device (6), to flow in from the high-pressure fluid inlet (71) of the ejector (7) to mix in the ejector (7) with refrigerant that leaves from the liquid phase outlet (83) of the separator (8), passes through the first heat exchanger (3) and flows in from the fluid suction inlet (72) of the ejector (7) to enter the separator (8), wherein the gas phase refrigerant in the separator (8) returns from the gas phase outlet (82) of the separator to the compressor inlet (12).

10. The method according to any of claim 8 or 9, wherein the method comprises adjusting an opening of the second throttling device (6) to control dryness of the fluid entering the high-pressure fluid inlet (71) of the ejector (7) in the heating mode with ejector (7).
